# FASCICULE DE BREVET EUROPEEN

(11) **EP 3 236 632 B1**
(45) Date de publication et mention de la délivrance du brevet: **09.12.2020**
(21) Numéro de dépôt: 17167133.2
(22) Date de dépôt: 19.04.2017
(51) Int. Cl.: G06F 21/10, H04L 9/08, H04L 9/14, H04N 21/235, H04N 21/2347, H04N 21/266, H04N 21/254, H04N 21/4405, H04N 21/4627, H04N 21/6334, H04N 7/167, H04N 21/472, H04N 21/4623, H04L 29/06

(54) **PROCEDE ET DISPOSITIF PERMETTANT L'APPLICATION D'UN SYSTEME DE CONTROLE D'ACCES A LA PROTECTION DES FLUX VIDEO EN MODE DIRECT**
VERFAHREN UND VORRICHTUNG ZUR ANWENDUNG EINES ZUGRIFFSKONTROLLSYSTEMS ZUM SCHUTZ VON VIDEOSTREAMS IM DIREKTMODUS
METHOD AND DEVICE ALLOWING AN ACCESS CONTROL SYSTEM TO BE APPLIED TO THE PROTECTION OF STREAMED VIDEO IN DIRECT MODE

(30) Priorité: 20.04.2016 FR 1653506
(43) Date de publication de la demande: 25.10.2017
(73) Titulaire: 4T SA, 8070 Bertrange (LU)
(72) Inventeur: NACCACHE, David, 75018 PARIS (FR); JECZMINSKI, Lukasz, 02-784 VARSOVIE (PL); ZAJAKALA, Mateusz, 85-183 BYDGOSZCZ (PL); SAINI, Jas, 1807 BLONAY (CH)
(74) Mandataire: Sayettat, Julien Christian

(56) Documents cités:
- EP-A2- 2 034 729
- WO-A1-2013/186274
- WO-A1-2014/152060
- US-A1- 2004 242 150
- US-A1- 2009 028 331
- US-A1- 2010 067 703
- US-A1- 2014 006 951
- US-B1- 9 043 827
- "Digital Video Broadcasting (DVB); Head-end implementation of DVB SimulCrypt European Broadcasting Union Union Europ PRG A CR enne de Radio-T PRG A CR l PRG A CR vision EBUÂÜER; ETSI TS 103 197", ETSI STANDARD, EUROPEAN TELECOMMUNICATIONS STANDARDS INSTITUTE (ETSI), SOPHIA ANTIPOLIS CEDEX, FRANCE , no. V1.5.1 2 octobre 2008 (2008-10-02), pages 1-294, XP002728057, Extrait de l'Internet: URL:http://www.etsi.org/deliver/etsi_ts/10 3100_103199/103197/01.05.01_60/ts_103197v0 10501p.pdf [extrait le 2014-07-15]

## Description

### 1. Domaine de l'invention

Le domaine de l'invention est celui de la protection du contenu numérique, et en particulier du contenu audiovisuel.

Plus précisément, l'invention concerne une technique applicable, entre autres, aux systèmes de contrôle d'accès et de protection de contenu dont l'objectif est de prévenir l'accès non-autorisé au contenu produit par des fournisseurs de contenu numérique.

Plus précisément, la présente technique concerne la mise en œuvre d'une architecture de protection de contenu numérique, en particulier audiovisuel, dans des processeurs, microprocesseurs, ordinateurs, boitiers de déchiffrement et dispositifs de calcul dédiés. Une telle architecture procure à la fois (1) une sécurité meilleure que l'état de l'art, (2) une architecture significativement plus optimisée que l'art antérieur, (3) une extension de systèmes existants à la protection de flux vidéo diffusés en mode direct (en anglais « streaming »).

La présente technique concerne tout particulièrement les réseaux de télévision à péage et les diffuseurs de contenu sur Internet, où il est désirable de ne permettre l'accès au contenu numérique diffusé en mode direct qu'aux utilisateurs ayant effectivement acquis les droits d'accéder à un tel contenu.

L'invention a de nombreuses applications, telles que par exemple la protection de contenu de divertissement, les téléconférences, les flux vidéo sortant des téléphones portables, ou toute application dans laquelle un contenu numérique diffusé en mode direct ne doit être accessible qu'à un ensemble restreint de destinataires ou d'abonnés.

Plus généralement, l'invention peut s'appliquer dans tous les cas où de tels systèmes de diffusion de contenu en mode direct, c'est-à-dire à flux continu, sont utilisés ou déployés.

L'invention concerne en particulier un système de gestion de droits numériques et de transmission de contenu numérique à flux continu sur un réseau Internet de communication de données structuré selon un mode de routage en multidiffusion. L'invention concerne également un procédé d'acquisition de droits numériques et un procédé de transmission de contenu numérique à flux continu mis en œuvre par un tel système, un produit programme d'ordinateur pour la mise en œuvre de tels procédés, ainsi qu'un support d'enregistrement sur lequel est enregistré un programme d'ordinateur pour la mise en œuvre de tels procédés.

### 2. Art Antérieur

On s'attache plus particulièrement dans la suite de la présente invention à décrire la problématique existant dans le domaine de la diffusion contrôlée de contenu audiovisuel chiffré, à laquelle ont été confrontés les inventeurs. L'invention ne se limite, bien sûr, pas à ce domaine particulier d'application, mais présente un intérêt pour toute technique devant assurer la protection de contenu audiovisuel ou pour toute technique devant faire face à une problématique proche ou similaire.

### 2.1. Les systèmes d'accès conditionnel

Les termes « accès conditionnel » (en anglais « Conditional Access » ou « CA ») et « systèmes d'accès conditionnel » (en anglais « CA Systems » ou « CAS ») désignent un ensemble de dispositifs, procédés et logiciels ayant pour but la protection du contenu numérique ou analogique. Les CAS mettent en œuvre la protection du contenu en s'assurant qu'un ensemble d'exigences sont respectées avant d'autoriser l'accès au contenu. Le terme CAS est souvent associé aux systèmes de télévision numérique (à la fois ceux diffusés via satellite et ceux diffusés par câble) même si, historiquement, les premiers CAS furent analogiques (e.g. le système Videocrypt de l'entreprise Thomson Consumer Electronics).

La norme Digital Video Broadcasting (DVB), définit les normes de CAS dans les documents de spécification dits DVB-CA (« Conditional Access »), DVB-CSA (« Common Scrambling Algorithm ») et DVB-CI (« Common Interface »). Ces normes définissent une méthode permettant d'embrouiller un flux de télévision numérique tout en permettant un accès à ce flux aux utilisateurs ayant une carte à puce de déchiffrement valide. Les spécifications DVB de l'accès conditionnel sont disponibles en ligne et sont connues à l'homme du métier. Des centaines de millions de décodeurs de télévision à péage mettent actuellement en œuvre les spécifications DVB.

La protection du contenu est effectuée en combinant l'embrouillage du signal vidéo et le chiffrement des clés d'embrouillage. Le flux de données vidéo est embrouillé avec une clé cryptographique secrète de 48 bits dite « mot de contrôle » (en anglais « Control Word » ou « CW »). La connaissance d'un CW à un moment donné dans le temps n'est pas de nature à compromettre sérieusement la sécurité du système d'accès conditionnel dans la mesure où les fournisseurs de contenu changent le CW plusieurs fois par minute. La durée de validité d'une clé donnée (cette durée étant un paramètre du CAS) est appelée la « période cryptographique » (en anglais « Crypto Period » ou « CP »). Le CW est généré d'une manière telle que la connaissance du CW de la CP numéro n ne permet pas de deviner ou de calculer les CWs des CPs numéro n+1 et au-delà. La connaissance du CW de la CP numéro n ne permet pas non plus de deviner ou de calculer les CWs des CPs n-1 et avant. Les spécifications DVB recommandent d'utiliser un procédé physique afin de ce faire.

Afin que le destinataire puisse déchiffrer le flux de données entrant, le dispositif destinataire doit être tenu informé de manière permanente des CWs successifs. En pratique, le dispositif destinataire doit même être informé des CWs légèrement en avance afin d'éviter toute interruption de l'affichage du contenu pour l'utilisateur.

Le chiffrement est utilisé afin de protéger le CW durant sa transmission au destinataire : le CW est chiffré afin de devenir un Message de Droit de Contrôle (en anglais « Entitlement Control Message » ou « ECM »). Le CAS du dispositif destinataire déchiffre l'ECM pour en extraire le CW seulement si le destinataire est autorisé à le faire. Le pouvoir de ce faire est envoyé au destinataire sous la forme d'un Message de Gestion de Droits (en anglais « Entitlement Management Message » ou « EMM »). Les EMMs sont spécifiques à chaque abonné, identifié à l'aide de la carte à puce insérée dans son boîtier de déchiffrement ou à un groupe d'abonnés. Les EMMs sont habituellement émis ou renouvelés une fois par mois. Suite à des attaques sur le terrain, il est apparu qu'une telle fréquence de diffusion des EMMs n'est pas suffisante à prévenir la fraude. Ainsi, l'entreprise TPS a réduit l'intervalle de diffusion des EMMs à 12 minutes. Cette fréquence peut grandement différer entre fournisseurs de contenu : par exemple, BSkyB utilise une durée de validité d'un mois et demi. Lorsque le système Nagravision 2 fut compromis, l'entreprise Digital+ a commencé à renouveler les EMMs à des intervalles de trois jours afin de perturber la visualisation du contenu par les pirates.

Les contenus des ECMs et des EMMs ne sont pas standardisés. Ainsi, leur formats dépendent des CASs particuliers en utilisation.

Le CW peut parvenir au dispositif destinataire via plusieurs ECMs en même temps, ce qui permet l'utilisation de plusieurs CASs en même temps. Cette technique, spécifiée par DVB, et connue sous le terme « Simulcrypt », permet d'économiser de la bande passante et encourage plusieurs opérateurs à multiplexer leurs informations et à coopérer. Le Simulcrypt DVB est très courant en Europe. Certains canaux, tels que CNN International Europe diffusé à partir des satellites Hot Bird, peuvent utiliser jusqu'à 7 CASs différents en parallèle.

Les cartes de déchiffrement sont lues et parfois mises à jour avec des droits de visionnement spécifiques, soit via un module d'accès conditionnel (en anglais « Conditional-Access Module » ou « CAM »), un lecteur de cartes au format PCMCIA (format aussi dit « PC card ») satisfaisant les normes DVB-CI standards, ou via un lecteur de cartes embarqué compatible ISO/IEC 7816, tel que celui de la Sky Digibox.

Etant donnée l'utilisation fréquente et commune du CA dans les systèmes DVB, il existe de nombreux outils illégaux permettant de faciliter ou de contourner le chiffrement DBV. Les émulateurs de CAM et des CAMs multi-format existent. Les CAMs multi-format peuvent soit lire plusieurs formats de cartes soit déchiffrer directement un CAS compromis. La plupart des CAMs à format multiple, et tous les CAMs pouvant déchiffrer un signal sont basés sur la retro-conception du CAS correspondant. De nombreux CAS ont été compromis à ce jour.

### 2.2. La Gestion des Droits Numériques

La Gestion Numérique des Droits, ou Gestion des Droits Numériques, (en anglais « Digital Rights Management » ou « DRM »), ou encore les Mesures Techniques de Protection, ont pour objectif de contrôler l'utilisation qui est faite des œuvres numériques.

Le DRM peut s'appliquer à tous types de supports numériques physiques (disques, Digital Versatile Disc, Blu-ray, logiciels, etc.) ou de transmission (télédiffusion, services Internet, etc.) grâce à un CAS, tel que décrit précédemment.

Les dispositifs techniques ou logiciels de DRM peuvent viser à :
- restreindre la lecture du support d'information à une zone géographique prévue (par exemple les zones des DVD) ;
- restreindre la lecture du support d'information à du matériel spécifique (par exemple les versions smartphone ou tablette) ;
- restreindre la lecture du support d'information à un constructeur ou vendeur (afin de bloquer la concurrence) ;
- restreindre ou empêcher la copie privée du support d'information (transfert vers un appareil externe) ;
- restreindre ou verrouiller certaines fonctions de lecture du support (désactivation de l'avance rapide sur certains passages d'un DVD). Ceci est très utile pour obliger l'exposition aux annonces publicitaires ;
- identifier et tatouer numériquement toute œuvre et tout équipement de lecture ou enregistrement (pour faciliter le pistage des copies non autorisées, mais surtout empêcher la personnalisation et donc le contrôle d'une technologie, par exemple empêcher l'installation d'un autre système d'exploitation sur un ordinateur).

Les mesures techniques exploitent un chiffrement de l'œuvre, combiné à un CA. L'éditeur ou le distributeur qui exploite ce CAS ne confie la clé de contrôle d'accès du produit, qu'en échange d'une preuve d'achat ou de souscription pour y accéder (abonnement à une chaîne payante, VOD, téléchargement, etc.). L'accès à la lecture (et/ou sa copie) du document ainsi protégé n'est alors autorisée que pour l'équipement ou pour l'identification logicielle certifiée par le fournisseur.

Les notions concernant les mesures techniques de protection du contenu existent dans le droit (DMCA en Europe comme aux États-Unis, le DADVSI en France) et font l'objet d'un accord international. La loi reconnaît le CA comme une mesure de protection et punit les usagers qui le contournent ou en publient les secrets.

Une architecture de DRM est basée sur le chiffrement des œuvres. Seul un dispositif ayant la clé de déchiffrement est capable de consulter l'œuvre. Ce principe pose le problème de l'inviolabilité du matériel utilisé par le public pour consulter les œuvres, afin que les clés de déchiffrement restent secrètes. Ainsi, les secrets des lecteurs de DVD ont été percés et les DVD sont désormais décryptables par des logiciels qui ne disposent pas des clés. Pour conserver dans l'ordinateur de chaque utilisateur des secrets inviolables, les fabricants développent des systèmes de DRM profondément intégrés au matériel des ordinateurs. Le but est que chaque ordinateur puisse être identifié à distance (par connexion Internet) et de manière fiable. Ainsi, une architecture client-serveur permet de vérifier continuellement l'utilisation et la dissémination de chaque exemplaire d'une œuvre.

Plusieurs fabricants mettent déjà en œuvre des systèmes de DRM purement logiciels, qui sont toutefois sujet au contournement.

Voici le fonctionnement général d'un tel système de DRM:
- Le serveur de contenus S dispose du contenu protégé C par droits d'auteur (par exemple de la musique) ;
- Le client K est le logiciel ou le périphérique qui permet de consulter C (par exemple un lecteur multimédia ou un baladeur numérique) ;
- Lorsqu'un utilisateur U souhaite télécharger un fichier F, K fournit un identifiant unique à S. S chiffre F (afin d'obtenir C) spécifiquement pour U ;
- C est ensuite transféré de S vers K, usuellement via l'Internet ;
- Lorsque U souhaite consulter le contenu F qu'il a ainsi téléchargé, le lecteur vérifie s'il a déjà une licence pour F. Si le lecteur ne dispose pas d'une licence, il se connecte à S. Si U est autorisé (par exemple en ayant acquitté le paiement), le lecteur télécharge une licence L. L est une structure de données qui contient la clé de déchiffrement ainsi que les conditions d'utilisation du contenu F. L est protégée en confidentialité et en intégrité ;
- Le lecteur vérifie que les conditions d'utilisation définies par L sont respectées. Dans ce cas, le lecteur peut déchiffrer C avec la clé de déchiffrement stockée dans la licence afin de délivrer F à U.

Cependant, si U change de client (nouveau logiciel, nouvel ordinateur, nouveau baladeur), il devra demander une nouvelle licence L' selon les conditions du contrat passé avec le fournisseur (par exemple, iTunes permet sept licences liées à un changement de matériel sans restriction de durée pour l'achat d'un titre).

### 2.3. La télévision IP

La télévision IP, ou télévision sur IP, ou l'IPTV (de l'anglais « Internet Protocol Télévision ») est une forme de télévision diffusée sur un réseau utilisant le protocole IP (Internet Protocol).

Le terme IPTV regroupe la télévision en direct, la vidéo à la demande (en anglais « Vidéo on Demand » ou « VoD »), le jeu à la demande (en anglais « Game on Demand », « GoD » ou « Cloud Gaming ») et les séances de rattrapage (en anglais « catch-up TV »). Les méthodes de communication sont diverses. La télévision en direct utilise une solution IP multicast (aussi appelée « IP multidiffusion »), ce qui permet d'envoyer les informations une seule fois pour plusieurs personnes. La VoD et la télévision de rattrapage utilisent une solution IP unicast (une seule destination pour ces flux).

L'IPTV utilise la même infrastructure que l'accès Internet, mais avec une bande passante réservée. En France, l'IPTV est souvent fournie avec l'offre d'abonnement Internet haut débit. Les fournisseurs parlent d'offre « triple-play » (Internet, téléphonie, télévision).

L'IPTV peut aussi être déployé dans les collectivités privées, en effet, cela permet à un hôtelier, hôpital, ou une résidence de vacances de pouvoir proposer un bouquet de chaînes en IPTV ainsi qu'une gamme de services facturables et à la demande, l'établissement proposant ce réseau est considéré comme opérateur télécom.

La technologie IP permet de partager l'interface avec d'autres applications (internet, VOIP). De plus, des codecs de plus en plus performants (MPEG-2, MPEG-4 et VC-1) permettent d'optimiser la consommation de la bande passante. Le réseau IP permet ainsi de diffuser davantage de contenus et de fonctionnalités. Dans un réseau TV classique ou satellite, ayant recours à la technique de diffusion vidéo, l'ensemble des contenus est constamment proposé à l'utilisateur qui les sélectionne ensuite dans son décodeur. Il peut alors choisir parmi une variété d'options tandis que l'opérateur télécom, câble ou satellite alimente en permanence le canal de distribution. Le réseau IP quant à lui, fonctionne différemment : les contenus restent dans le réseau, et seuls ceux sélectionnés par l'utilisateur lui sont envoyés. Ceci permet de libérer de la bande passante et de ne pas limiter le choix de l'utilisateur à la taille du canal de distribution. Seules les chaînes regardées sont envoyées sur le réseau IP grâce au multicasting (aussi appelé « multidiffusion ») contrairement à la VOD où la vidéo est envoyée en unicast et donc la bande passante est utilisée pour chaque téléspectateur.

La plateforme IP permet également une réelle expérience de visionnage interactive et personnalisée. Par exemple, le fournisseur peut ajouter un guide des programmes interactif permettant aux utilisateurs de lancer une recherche par titre ou par acteur. Ou encore, la fonctionnalité « Picture in Picture » (« PiP ») permettant de regarder une deuxième chaîne sur l'écran de télévision. De cette façon, les téléspectateurs peuvent consulter les statistiques des joueurs tout en regardant le match ou encore choisir l'angle de la caméra. Ils peuvent également accéder aux musiques et photos stockées sur leurs ordinateurs directement depuis leur télévision, utiliser un téléphone mobile pour programmer l'enregistrement d'une émission, ou même régler le contrôle parental.

Tout cela est toutefois rendu possible grâce à l'existence de réseaux terrestres, satellites et câblés associés à des décodeurs sophistiqués. Afin qu'une interaction puisse être établie entre le récepteur et l'émetteur, une chaîne parasite est nécessaire. C'est la raison pour laquelle les réseaux de télévision terrestres, satellites et câblés ne permettent pas l'interactivité. Toutefois, l'interactivité via ces réseaux est rendue possible par l'utilisation combinée de réseaux TV et de réseaux de données comme Internet ou un réseau de communication mobile.

### 2.4. Le système Marlin

Marlin est une plateforme DRM crée par une communauté de standardisation ouverte appelée Marlin Developer Community (MDC). MDC développe la technologie nécessaire et gère les partenaires et les services permettant la création de services interopérables de distribution de contenu numérique. La technologie Marlin fournit aux consommateurs la capacité de gérer les relations entre dispositifs, services réseau et contenu numérique. Avec Marlin, les fournisseurs de contenu et les fabricants de dispositifs peuvent créer et supporter des services d'accès au contenu sur des réseaux ouverts.

MDC a été formé en 2005 par cinq entreprises : Intertrust, Panasonic, Philips, Samsung et Sony. MDC a publié ses premières spécifications en mai 2006. Les fondateurs de Marlin ont également formé la Marlin Trust Management Organization (MTMO) afin de disposer d'une organisation de confiance neutre pouvant gérer la gestion et l'octroi de licences Marlin. La MTMO débuta ses activités commerciales en janvier 2007.

Marlin a été créé avec des buts de conception spécifiques. En tout premier lieu, Marlin permet aux dispositifs du consommateur d'importer du contenu à partir de services indépendants et multiples et de permettre des interactions pair-à-pair. En second lieu, Marlin est basé sur une architecture de DRM à usage généraliste. Les spécifications du système Marlin définissent à la fois les caractéristiques techniques et l'architecture nécessaires à l'interopérabilité des dispositifs et des services.
La plupart des implémentations de Marlin respectent les spécifications du noyau de Marlin. Ce noyau définit (1) les composants de base, (2) les protocoles (3), le modèle de domaine de consommateur (en anglais « Consumer Domain ») permettant l'interopérabilité entre des dispositifs mettant en œuvre Marlin et (4) des services mettant en œuvre les spécifications Marlin. Ces spécifications sont basées sur les technologies de référence Octopus et NEMO qui ont été adaptées à des interactions pair-à-pair entre dispositifs.

**Octopus** : La gestion des droits au sein de Marlin est basée sur Octopus qui est une architecture DRM à usage général. Le cœur système Octopus est un moteur relationnel à base de graphes. Dans Marlin, les objets nœuds Octopus servent à représenter des entités système (telles que les utilisateurs ou les dispositifs), et des liens entre nœuds représentants des relations. Le système de nœuds et de liens gère où, comment et quand un contenu peut être utilisé dans le système. Octopus est disponible sur plusieurs plateformes et son format de média est cryptographiquement agnostique.

**NEMO (Networked Environment for Media Orchestration)** fournit le cadre de fourniture de services permettant une connexion de confiance entre différentes composantes d'un système DRM Marlin. Sur la base des normes de services web, NEMO définit des interfaces de service, des services de politiques d'accès ainsi que des relations de confiance et de support entre les entités distributrices jouant des rôles bien définis et certifiés. Le cadre NEMO permet aux composants Marlin de créer des messages protégés et les échanger entre des entités authentifiées et autorisées. Les services supportés par NEMO peuvent être opérés avec d'autres services média spécifiques aux applications qui n'ont pas forcément besoin d'être NEMO-compatibles.
Les produits principaux implémentant Marlin sont:
- **ExpressPlay:** ExpressPlay est un service hébergé fourni par Intertrust depuis mai 2013. ExpressPlay a été principalement conçu afin d'intégrer la protection de contenu Marlin dans des services de distribution de contenu basés sur Internet. ExpressPlay fournit un composant serveur Marlin hébergé pour la gestion de clés Marlin et un kit de développement logiciel (en anglais « Software development kit » ou « SDK ») pour des clients iOS et Android.
- **Le Bluewhale Marlin Broadband Server** (le serveur large-bande Bluewhale Marlin): est une implémentation configurable du serveur Marlin fournissant le support nécessaire à la livraison de contenu numérique à des clients Marlin. Afin de préparer l'information requise par les clients, un serveur Bluewhale s'intègre à une logique commerciale dorsale (en anglais « back-end business logic ») d'un fournisseur de service en utilisant une interface XML. Le serveur traduit la logique commerciale en des objets de droits Marlin, créant et gérant les licences et les enregistrements d'utilisateurs.

- **Bento4 Packager:** Le Bento4 Packager est un outil logiciel pour le groupage (en anglais « packaging ») et le survol (en anglais « parsing ») de contenu. Bento4 fonctionne avec des clients Marlin. Cet outil regroupe, chiffre et protège des fichiers de contenu coté serveur. Coté client, l'outil permet le déchiffrement et le survol de contenu.
- **Sushi Marlin Client SDK:** Le Sushi Marlin Client SDK est utilisé afin de créer un client avec la fonctionnalité DRM. Ce kit de développement logiciel (SDK) fournit les composants Marlin primaires nécessaires pour déterminer les conditions de licence et contrôler l'accès au contenu protégé. Le Sushi Marlin Client SDK peut être adapté à des dispositifs matériels de rejeu (playback) de contenu. Sushi Marlin Client SDK peut également être utilisé par des applications d'accès aux services afin d'enrichir de telles applications par une fonctionnalité DRM. Le SDK client Sushi Marlin n'est plus fourni par Intertrust depuis mai 2013.

**Les partenaires Marlin:** En octobre 2008, the MDC annonça la formation du programme de partenariat Marlin (en anglais « Marlin Partner Program » ou « MPP »). Le MPP comportait initialement plus de 25 entreprises. En janvier 2014 ce programme comportait 42 entreprises partenaires. Les membres partenaires identifient, développent et fournissent une variété de composants techniques et des services d'intégration ayant pour but de créer une place de marché de solutions Marlin. Les opérateurs de réseaux, fournisseurs de services, fabricants de dispositifs et autres entreprises déployant des produits et services à base de Marlin peuvent ainsi travailler avec des entreprises membres de MPP.

**Les services de confiance Marlin:** La technologie Marlin est basée sur des normes mais la sécurité d'un système Marlin est gérée par une entité indépendante appelée l'Organisation de la Gestion de la Confiance Marlin (en anglais « Marlin Trust Management Organization » ou « MTMO »). Le MTMO maintient l'intégrité et la sécurité du système à l'aide de ses services de gestion de clés.

**Le déploiement actuel de Marlin:** Marlin est commercialement déployé à travers le monde dans une variété de dispositifs et de services. Marlin est inclus dans la norme nationale japonaise IPTV et a été déployé par Actvila, un portail de télévision à base de web lancé en 2007. Le service de portail Actvila, créés par Hitachi, Panasonic, Sharp, Sony, et Toshiba, incluaient un déploiement de services de télévision par Internet. Sony utilise Marlin dans le réseau PlayStation Network, offrant ainsi aux utilisateurs un service de téléchargement de vidéo permettant l'achat ou la location de contenu sur les systèmes PS3, PS4 et PSP. Marlin est également utilisé dans les lecteurs de Blu-ray du Philips Net TV service.

Les organismes de normalisation suivants ont intégré Marlin dans leurs spécifications:
- Ultraviolet, le système d'authentification et de distribution de droits numériques à base d'infonuage (Cloud) du consortium Digital Entertainment Content Ecosystem (DECE LLC).
- Le forum Open IPTV

De plus, les initiatives nationales suivantes ont sélectionné Marlin :
- La plateforme de services Internet italienne développée par le consortium Tivu
- La plateforme britannique connectée d'Internet ouvert YouView
- Les spécifications TNT 2.0 du HD-Forum France.
- Enfin, des services de média au consommateur chinois tels que iQIYI (groupe Baidu) et PPTV sont également des licenciés de Marlin.

### 2.5. Les services par contournement

Un service par contournement (ou service alternatif; en anglais « over-the-top service » ou « OTT ») est un service de livraison d'audio, de vidéo et d'autres médias sur Internet sans la participation d'un opérateur de réseau traditionnel (comme une compagnie de câble, de téléphone ou de satellite) dans le contrôle ou la distribution du contenu. Le fournisseur d'accès Internet distribuant le contenu peut être au courant du contenu des paquets IP circulant sur son réseau, mais n'est pas responsable, ni en mesure de contrôler, l'affichage des contenus, le respect des droits d'auteur, et / ou la redistribution du contenu.

L'OTT est très différent de l'achat ou la location de contenu audio ou vidéo auprès d'un fournisseur de réseau traditionnel, comme la télévision payante, la vidéo à la demande ou la télévision IP ou le service AT&T U-Verse. L'OTT fait plutôt référence à un contenu qui provient d'un tiers, comme Hulu, Netflix, Crunchyroll ou Tou.tv, et qui est livré à l'appareil de l'utilisateur par un fournisseur d'accès Internet qui sert uniquement de transporteur de paquets IP.

Les consommateurs peuvent accéder à un OTT via divers appareils connectés à Internet tels que des ordinateurs de bureau, des ordinateurs portables, des consoles de jeux (comme la PlayStation 4, la WiiU et la Xbox One), des boitiers décodeur (en anglais « Set Top Box » ou « STB ») (comme le Roku), des téléphones intelligents (y compris les téléphones Android, les iPhones et les téléphones Windows), des téléviseurs intelligents (comme Google TV), et des tablettes.

### 2.6. Inconvénients de l'art antérieur

Les environnements traditionnels de diffusion de télévision reposent sur des CASs pour fournir des services de gestion de droits d'accès et d'embrouillage (chiffrement) de contenu audiovisuel. Ces systèmes utilisent habituellement une carte-à-puce insérée dans la STB. La carte-à-puce sert à gérer des clés de contenu et fournit périodiquement ces clés de contenu au système de désembrouillage. Les cartes-à-puce peuvent être couplées avec une STB spécifique de sorte à n'être utilisables qu'avec ce décodeur-là. Ce système classique, dont le niveau de sécurité est connu et étudié, est déjà déployé depuis trois décennies. Malgré cela, les inconvénients de ce système classique sont connus des opérateurs de réseaux télévisuels et de l'homme de l'art. En utilisant une solution basée sur du matériel, les opérateurs de réseaux télévisuels doivent supporter le coût d'achat de cartes-à-puce. Par ailleurs, les STBs doivent être également équipées de lecteurs de cartes-à-puce, ce qui accroit leur coût de fabrication et de revient. Les systèmes à base de cartes-à-puce ne permettent pas une intégration avec des dispositifs OTT tels que les PCs, tablettes ou téléphones. En outre, les fonctionnalités DRM utilisées dans des systèmes existants tels que par exemple des systèmes de vidéodiffusion Internet, ne peuvent être implantées telles quelles dans des systèmes de transmission de contenu numérique à flux continu sur un réseau Internet de communication de données structuré selon un mode de routage en multidiffusion (ou « multicast » en anglais). En effet, les réseaux de communication de données structurés selon un mode de routage en multidiffusion imposent des contraintes de charge et de bande passante du réseau très particulières, différentes de celles des systèmes précités, qui sont structurés en « unidiffusion » (ou « unicast en anglais) et pour lesquels la bande passante est utilisée pour chaque téléspectateur. La simple duplication, dans un système de transmission de contenu numérique à flux continu sur un réseau Internet de communication de données structuré selon un mode de routage en multidiffusion, de fonctionnalités DRM actuellement utilisées dans des systèmes de vidéodiffusion Internet ou encore dans des disques ou des lecteurs de contenu numérique, rendrait ce système beaucoup plus complexe et quasi impossible à maintenir. En effet, le même contenu devrait être protégé plusieurs fois afin de pouvoir être visualisable sur des appareils différents. Enfin, la majorité des CASs ne supporte pas des fonctions avancées de gestion de contenu telles que celles offertes par les systèmes de DRM (où une licence de contenu peut être achetée de plusieurs manières différentes et comporter différentes conditions d'accès devant être satisfaites).

### 3. Résumé de l'invention

La technique inventive proposée ne présente pas au moins certains des inconvénients de l'art antérieur.

La présente invention permet de protéger du contenu numérique à flux continu et non seulement du contenu numérique à la demande.

La présente invention permet également de réduire le coût et la complexité de systèmes hybrides permettant de protéger à la fois du contenu numérique en mode direct et non seulement du contenu numérique à la demande.

À ces fins, il est proposé, selon un premier aspect de l'invention, un système de gestion de droits numériques et de transmission de contenu numérique à flux continu sur un réseau Internet de communication de données structuré selon un mode de routage en multidiffusion, défini en accord avec la revendication 1 attenante.

L'invention concerne également, selon un deuxième aspect, un procédé d'acquisition de droits numériques mis en œuvre par un système tel que décrit ci-dessus, le procédé étant défini en accord avec la revendication 8 attenante. ci-dessus , le procédé comprenant un sous-procédé d'acquisition de droits numériques tel que décrit ci-dessus, le procédé étant défini en accord avec la revendication 9 attenante.

L'invention concerne en outre, selon un quatrième aspect, un produit programme d'ordinateur téléchargeable depuis un réseau de communication et/ou enregistré sur un support lisible par ordinateur et/ou exécutable par un processeur, comprenant des instructions de programme, lesdites instructions de programme étant adaptées pour mettre en œuvre les étapes du procédé d'acquisition de droits numériques tel que décrit ci-dessus et/ou les étapes du procédé de transmission de contenu numérique tel que décrit ci-dessus lorsque le produit programme est exécuté sur un ordinateur.

Ce produit programme d'ordinateur peut utiliser n'importe quel langage de programmation, et être sous la forme de code source, code objet, ou de code intermédiaire entre code source et code objet, tel que dans une forme partiellement compilée, ou sous la forme d'un circuit synthétisé à partir d'un langage de description matérielle (tel que VHDL ou Verilog) ou dans n'importe quelle autre forme souhaitable.

L'invention concerne enfin, selon un cinquième aspect, un support d'enregistrement sur lequel est enregistré un programme d'ordinateur comprenant des instructions de code de programme pour mettre en œuvre les étapes du procédé d'acquisition de droits numériques tel que décrit ci-dessus et/ou les étapes du procédé de transmission de contenu numérique tel que décrit ci-dessus.

Le support d'enregistrement peut être n'importe quelle entité ou dispositif capable de stocker le programme. Par exemple, le support peut comporter un moyen de stockage, tel qu'une RAM, une mémoire Flash, une clé USB, une ROM, par exemple un CD ROM ou une ROM de circuit microélectronique, ou encore un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un(e) ou plusieurs procédures ou sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un processeur, un coprocesseur cryptographique dédié, une unité centrale, un supercalculateur, un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels. Les différents modes de réalisation mentionnés ci-dessus sont combinables entre eux pour la mise en œuvre de la technique proposée.

D'autres caractéristiques et avantages apparaîtront plus clairement à la lecture de la description qui suit et à l'examen des figures qui l'accompagnent.

### 4. Description des figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :

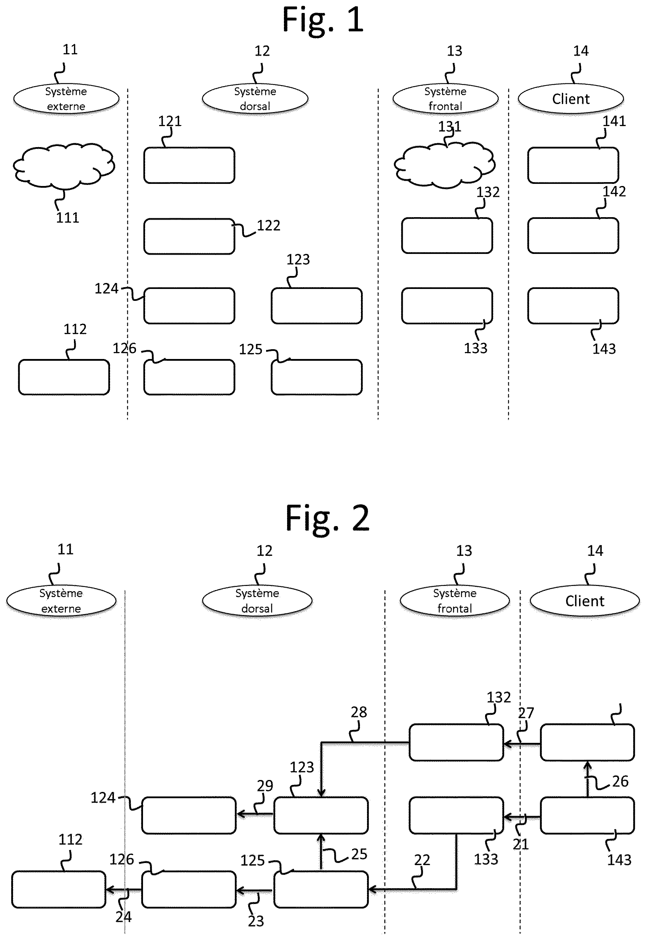

- la figure 1 illustre le système inventif ;
- la figure 2 illustre le fonctionnement du système inventif lors de la phase d'acquisition des droits DRM ;
- la figure 3 illustre le fonctionnement du système inventif lors de la phase de livraison du contenu en mode direct et de son déchiffrement ;
- la figure 4 illustre une architecture matérielle et logicielle mettant en œuvre l'invention ;

### 5. Description

### Le système objet de l'invention se compose des modules suivants :

Les modules appartiennent à trois catégories : une catégorie « Système dorsal » (12), une catégorie « Système frontal » (13) et une catégorie « Client » (14) ; et s'interfacent à une quatrième catégorie, à savoir une catégorie « Système Externe » (11).

### 5.1. La catégorie « Système externe » comporte les éléments suivants :

5.1.1. La Source CDN (111) (en anglais : « Content Delivery Network » ou « CDN ») : La source CDN fournit le contenu audiovisuel au système inventif. Le contenu audiovisuel est acquis sous la forme d'un signal clair (intelligible) de divers types de fournisseurs de contenu (par exemple des liaisons satellite, des agrégateurs de contenu, des liaisons directes de diffuseurs etc.). Le contenu est délivré au pôle de tête (en anglais "Head End") sous la forme d'un flux MPEG (en anglais « MPEG Single Program Transport Stream multicast ») avec des débits variés et des formats de codage vidéo variés (MPEG/AVC). Ces informations transitent via une pluralité de points de trafic Internet d'échange de contenu.
5.1.2. Le Système CRM (112): Le système de gestion de relation clients (en anglais « Customer Relationship Management system ») gère les abonnés, leurs abonnements, leurs bouquets et les offres commerciales, les dispositifs d'accès au contenu des abonnés et les droits des abonnés. Le Système CRM (112) fournit l'information nécessaire au processus de facturation. Le Système CRM (112) est utilisé par les services commerciaux et opérationnels de l'opérateur afin d'attribuer des droits d'accès au contenu aux clients et gérer leurs données techniques et leurs données de facturation. Le Système CRM (112) est également désigné par l'acronyme « SMS » (de l'anglais « Subscriber Management System »). Le Système CRM (112) peut être hébergé dans les locaux d'un fournisseur de service externe ou, au contraire, être hébergé par l'entité exploitant le système inventif.

### 5.2. La catégorie « Système dorsal » comporte les éléments suivants :

5.2.1. L'embrouilleur (121) : Un embrouilleur est un multiplexeur ayant la capacité d'embrouiller un flux de transport MPEG entrant. Un embrouilleur typique utilise un embrouillage de type « TS-packet » avec une rotation de CW et un chiffrement AES-128 du signal vidéo, audio et contenu des sous-titres. Un autre exemple de réalisation est l'utilisation de DVB-CSA. Afin de permettre le défilement rapide (avant ou arrière) de contenu, certaines portions de contenu peuvent être laissées en clair (paquets PUSI ou, par exemple, 5% des paquets).
5.2.2. Le générateur d'ECMs (122): génère des ECMs ("Entitlement Control Messages") afin que le multiplexeur insère ces ECMs dans le flux de transport embrouillé. L'interface entre l'embrouilleur (121) et le générateur d'ECMs (122) est définie par la norme « Head-End Simulcrypt Standard (ETSI TS 103 197) ». Les ECMs contiennent l'identifient de contenu DRM correspondant à un bouquet donné. Le générateur d'ECMs (122) utilise un Serveur de clés (124) afin d'obtenir la clé de contenu correspondant à l'identifiant de contenu DRM reçu de l'embrouilleur (121).
5.2.3. Le Système Dorsal de DRM (123) : est une base de données d'objets DRM et des transactions qui doivent être récupérés par des clients DRM. Chaque objet DRM est par exemple une licence d'accès à un contenu numérique, un nœud d'abonnement ou encore un lien entre un utilisateur DRM et un identifiant de contenu numérique. Ainsi, le Système Dorsal de DRM (123) regroupe à la fois l'information technique des objets DRM (utilisateurs DRM, nœuds d'abonnement, identifiants de contenu) et l'information de logique commerciale associée (bouquets, dispositifs). Le Système Dorsal de DRM (123) fournit au Système Frontal de DRM (132) toutes les données nécessaires afin de générer des éléments DRM tels que les licences, les nœuds et les liens.
5.2.4. Le Serveur de Clés (124) : Gère les identités de contenus et les clés de contenu de tous les bouquets DRM. Le Serveur de Clés (124) offre des services de base de données sécurisée aux autres composants du système lorsque ces autres composants du système ont besoin d'accéder à des clés de contenu correspondant à des identifiants de contenu spécifiques.
5.2.5. Le Système Dorsal de Jetons (125) est le cœur de la logique commerciale du système dorsal. Le Système Dorsal de Jetons (125) génère des jetons d'action (listes d'opérations) pour les Clients DRM (142), indiquant aux Clients DRM (142) sur quelles données les Clients DRM (142) devraient interroger le Système Frontal de DRM (132). Le Système Dorsal de Jetons (125) applique les données CRM aux données des paquets des abonnés afin de générer les transactions de récupération d'objets DRM correspondant aux abonnements dans le Système Dorsal DRM (123). En se basant sur les données CRM, le Système Dorsal de Jetons (125) gère également l'état courant du statut du dispositif de visualisation de contenu de l'abonné. Le Système Dorsal de Jetons (125) gère également les données de bouquet dans la base de données du Système Dorsal de DRM (123).
5.2.6. Le Module CRM (126) est la partie du système inventif responsable de la communication avec le Système CRM (112). Le Module CRM (126) est une couche d'abstraction des fournisseurs de contenu permettant l'intégration de systèmes de CRM différents. Il suffit qu'un ensemble minimal d'opérations requises soit supporté pour que tout système de CRM puisse être utilisé pour gérer les données des bouquets des abonnés.

### 5.3. La catégorie « Système frontal » comporte les éléments suivants :

5.3.1. Le Réseau de Livraison de Contenu CDN (131) (en anglais « Content Delivery Network » ou « CDN ») pour canaux IPTV : Les canaux sont délivrés aux opérateurs dans un format embrouillé UDP MPEG SPTS multicast. Cette livraison de contenu s'effectue via de multiples points d'échange Internet. Les opérateurs reçoivent tout le trafic IPTV dans leurs locaux en utilisant un routeur multicast indépendant du protocole (en anglais « Protocol-Independent Multicast Router » ou PIM router) ou s'abonnent dynamiquement au contenu requis via le protocole IGMP (en anglais « Internet Group Management Protocol ») en utilisant un routeur PIM tête de réseau.
5.3.2. Le Système Frontal de DRM (132) est un serveur DRM fourni par l'entreprise Intertrust (le Système Frontal de DRM (132) est aussi appelé "Bluewhale Server"). Le Système Frontal de DRM (132) est responsable de la communication sécurisée avec les Clients DRM (142). Le Système Frontal de DRM (132) utilise le Système Dorsal de DRM (123) pour récupérer les données commerciales nécessaires à la génération des objets DRM requis par les Clients DRM (142).
5.3.3. Le Système Frontal de Jetons (133) est un serveur HTTP Proxy accessible à partir d'Internet. Le Système Frontal de Jetons (133) fournit un accès sécurisé aux services offerts par le Système Dorsal de Jetons (125) à l'intention des Applications Interface Utilisateur UI (143).

### 5.3. La catégorie « Système client » comporte les éléments suivants :

5.4.1. Le Client IPVT (141) fait partie de la pile applicative du dispositif de visualisation de l'abonné. Le Client IPVT (141) est responsable de l'accès au contenu IPTV, et de l'exploration du contenu (en anglais « média parsing »). Le Client IPVT (141) est également responsable de la visualisation du contenu (en anglais « playout »). Le Client IPVT (141) manipule les flux entrants IPTV et leur encodage. Le Client IPVT (141) utilise le Client DRM (142) pour obtenir les clés nécessaires au désembrouillage du contenu.
5.4.2. Le Client DRM (142) est une librairie logicielle de l'entreprise Intertrust (connue de l'homme de l'art sous le nom de « Wasabi / ExpressPlay SDK »). Le Client DRM (142) est embarqué à bord du dispositif d'accès au contenu de l'abonné. Le Client DRM (142) communique confidentiellement avec le Système Frontal de DRM (132) pour obtenir les objets et licences DRM et offre une interface de programmation d'applications (en anglais « Application Programming Interface » ou « API ») au sous-système de d'affichage de contenu (en anglais « média playout subsystem ») permettant de vérifier les droits de contenu par rapport aux licences disponibles. Les objets DRM sont récupérés à partir de "jetons d'action" générés par le Système Dorsal de Jetons (125) et sont fournis au Client DRM (142) par l'Application UI (143).
5.4.3. L'Application Interface Utilisateur UI (143) est une interface utilisateur de haut niveau présente dans le dispositif d'accès au contenu de l'abonné (par exemple son téléphone ou sa tablette): Périodiquement, ou en réponse aux actions de l'abonné, l'Application Interface Utilisateur UI (143) contacte le Système Frontal de Jetons (133) pour récupérer un «jeton d'action » pour des droits DRM. Le jeton d'action est ensuite passé à la librairie du Client DRM (142) qui effectue l'opération de récupération des droits. L'Application d'Interface Utilisateur UI (143) fournit à l'utilisateur une interface permettant de démarrer la visualisation du contenu (par exemple le zapping de canaux IPTV) et permettant la gestion locale des autorisations DRM en la librairie du Client DRM (142).

### 6. Description d'un mode de réalisation particulier

Dans ce mode de réalisation, le système précédemment explicité met en œuvre un fonctionnement en deux phases:

### 6.1. Phase d'acquisition de droits DRM

1. L'application UI (143) déclenche une mise à jour de droits DRM (21) en envoyant l'identifiant dispositif (en anglais : « device ID ») et l'identifiant de Gestion des Droits Numériques GDN (en anglais : « DRM ID ») au portail jeton (133) du système inventif.
2. La requête (22) est transmise par le Portail jeton (133) au Dorsal jeton (125).
3. Sur la base du « device ID », le dorsal jeton (125) interroge (23) le module CRM (126) afin de récupérer les droits de l'utilisateur.
4. La requête (24) est transmise par module CRM (126) au système externe de gestion de souscripteurs (112).
5. Les informations de droits récupérées (25) par le dorsal jeton (125) sont envoyées au serveur de DRM (123). Lesdites informations de droits (25) sont traduites en objets DRM par le dorsal DRM (123). A chaque transaction de récupération d'objet DRM pour un client DRM le dorsal DRM assigne un identifiant unique (ID).
6. L'application UI (143) donne instruction (26) au client DRM (142) de récupérer les objets DRM en créant et en passant au frontal DRM (132) un jeton d'action (27) contenant les actions devant être effectuées ainsi que leurs IDs respectifs.
7. Le client DRM (142) contacte le serveur DRM (123) via le frontal DRM (132) pour chacune des actions spécifiées en passant un ID de transaction (28) dans le jeton d'action (27).
8. Le frontal DRM (132) récupère du dorsal DRM (123) l'objet DRM correspondant au client DRM (142) sur la base de l'ID de transaction (28).
9. Pour construire une licence pour le contenu DRM, le dorsal DRM (123) contacte le serveur de clés (124) afin de traduire l'ID de contenu (29) en une clé faisant partie de la licence.

### 6.2. Phase de livraison de contenu et de déchiffrement

1. Le contenu en clair (31) est fourni par la source CDN (111) à l'embrouilleur (121) via un multicast Single-Program Transport Stream (dit « MPEG-TS over UDP »).
2. L'embrouilleur (121) contacte (32) le générateur d'ECMs (122) afin de construire une donnée ECM contenant le mot de contrôle (33) et les critères d'accès requis pour un canal donné.
3. Le générateur ECM (122) utilise un serveur de clés (124) afin de traduire le critère d'accès en un ID de contenu spécifique et en une clé de contenu spécifique.
4. L'embrouilleur (121) insère l'ECM (33) ainsi construit dans le flux d'informations chiffrées, obtenant ainsi une donnée multiplexée (34) envoyée au CDN (131).
5. Le flux d'informations chiffrées (35) est délivré au client IPTV (141) via le réseau de livraison de contenu CDN (131).
6. Le dispositif client (14) récupère l'ID du contenu des données ECM et consulte (36) le client DRM (142) pour vérifier si une licence pour cet ID de contenu existe. Si tel est le cas les droits sont accordés.

### 7. Autres caractéristiques et avantages

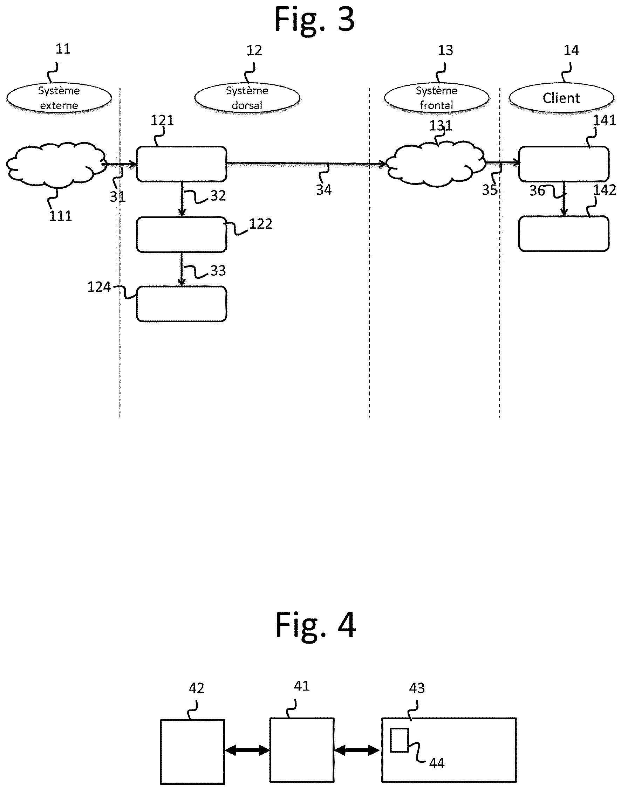

Une application pratique du système inventif est typiquement mise en œuvre sur un dispositif matériel dont l'architecture matérielle est illustrée par la figure 4. Un processeur 41, par exemple un microprocesseur, est connecté à un moyen d'interface d'entrée et de sortie de données 42, et à une mémoire 43 dans laquelle le processeur lit les instructions encodant un programme 44 mettant en œuvre le procédé inventif. La mémoire 43 sert également à lire et écrire données, messages chiffrés et clés.

Un grand avantage du système inventif par rapport à l'état de l'art est le suivant : En mettant en œuvre une solution DRM purement logicielle pour des flux IPTV l'invention élimine les inconvénients de l'art antérieur. En premier chef, le système inventif tire avantage des concepts DRM tels que le découplage de la protection du contenu de la gouvernance des droits d'accès. Ainsi, il devient possible pour les opérateurs de réseaux de disposer d'une solution de protection de contenu unifiée applicable à leur mode de diffusion ainsi qu'aux systèmes de livraison de contenu multi-écrans. L'utilisation d'une solution purement logicielle permet le déploiement de STBs moins chères dépourvues de lecteurs de cartes. L'utilisation d'une solution purement logicielle permet aussi d'éviter la dépendance d'un fournisseur spécifique d'un CAS. L'invention a également un avantage additionnel : le coût d'une carte-à-puce (actuellement supporté par l'abonné) est également évité. Un avantage additionnel de l'invention est le fait que le système inventif est basé sur une combinaison nouvelle de concepts traditionnels et sur une combinaison nouvelle de briques de base traditionnelles - telles que les ECMs et l'embrouillage DVB Simulcrypt compatible avec tout embrouilleur matériel standard. Ainsi le déploiement d'un réseau IPTV par un opérateur est plus rapide que le déploiement d'une solution DRM en flux (en anglais « streaming »). Avantageusement, l'invention permet aux opérateurs souhaitant déployer une solution multi-écrans de disposer d'un système de DRM unifié, utilisant des composants matériels et logiciels communs, permettant la gestion des droits sur toutes sortes de dispositifs appartenant aux consommateurs. Les opérateurs opérant déjà des réseaux IPTV peuvent ainsi facilement déployer une solution DRM basée sur des concepts déjà maitrisés en utilisant leurs embrouilleurs tête de réseau et leurs moyens de délivrance de contenus déjà en opération.

L'invention résout donc efficacement et définitivement tous les inconvénients de l'art antérieur.

## Revendications

1. Système de gestion de droits numériques et de transmission de contenu numérique à flux continu sur un réseau Internet de communication de données, ledit réseau Internet étant structuré selon un mode de routage en multidiffusion, le système comportant :
• un dispositif (12,13) de gestion de droits numériques comprenant :
∘ au moins un module (121, 122 ; 42) de chiffrement d'un contenu numérique, apte à être relié à une source (111)de contenu numérique à flux continu via ledit réseau Internet de communication de données, et apte à recevoir ledit contenu numérique à flux continu de ladite source (111) de contenu numérique ;
∘ un module (124) de stockage de clefs de chiffrement cryptographiques et d'identifiants de contenus, relié au module de chiffrement (121, 122) ;
∘ un module (126 ; 42) d'interfaçage avec un système (112) de gestion de relations clients ;
∘ au moins un module (125, 133) de création et de gestion de jetons d'actions, relié au module d'interfaçage (126 ; 42);
∘ au moins un module (123, 132) de gestion de droits numériques et d'accès audit contenu numérique, relié au module (124) de stockage de clefs de chiffrement cryptographiques et d'identifiants de contenus, et au module (125,133) de création et de gestion de jetons d'actions; ledit module (123, 132) de gestion de droits numériques et d'accès audit contenu numérique comprenant une base de données de stockage d'objets et de transactions lié(e)s auxdits droits numériques ;
• un dispositif client (14) d'accès audit contenu numérique à flux continu, relié au dispositif (12, 13) de gestion de droits numériques via ledit réseau Internet de communication de données, et comprenant :
∘ un module (141) d'accès, d'exploration, et de visualisation dudit contenu numérique à flux continu ;
∘ un module d'interface utilisateur (143), relié au module (125, 133) de création et de gestion de jetons d'actions ;
∘ un module client (142) de gestion de droits numériques, relié au module (141) d'accès, d'exploration, et de visualisation dudit contenu numérique à flux continu , au module d'interface utilisateur (143), et au module (123, 132)de gestion de droits numériques et d'accès audit contenu numérique;
chaque module (121-126, 141-143, 42) étant formé d'un composant logiciel, d'un composant matériel, ou d'un ensemble de composants matériels et logiciels **caractérisé en ce que** ;
• le module d'interface utilisateur (143) est configuré pour émettre une demande (21) de mise à jour de droits numériques, ladite demande de mise à jour (21) comprenant un identifiant du dispositif client (14) et un identifiant de Gestion des Droits Numériques GDN ; et
• le module (125, 133) de création de jeton et d'accès au contenu numérique est configuré pour recevoir la demande (21) de mise à jour de droits numériques et pour émettre une requête (22, 23 ,24) en récupération des droits numériques de l'utilisateur, ladite requête (22, 23, 24) étant émise sur la base de l'identifiant du dispositif client (14) ;
• le module d'interfaçage (126 ; 42) est configuré pour transmettre ladite requête (22, 23, 24) au système (112) de gestion de relations clients ;
• le module (125, 133) de création et de gestion de jetons d'actions est en outre configuré pour recevoir, via le module d'interfaçage (126 ; 42), des droits numériques de l'utilisateur transmis par le système (112) de gestion de relations clients ;
• le module (125, 133) de création et de gestion de jetons d'actions est configuré pour transmettre lesdits droits numériques reçus au module (123, 132) de gestion de droits numériques et d'accès audit contenu numérique;
• le module (123, 132) de gestion de droits numériques et d'accès audit contenu numérique est configuré pour traduire lesdits droits numériques en objets liés auxdits droits numériques et pour assigner un identifiant de transaction unique propre à chaque objet généré ;
• le module (125, 133) de création et de gestion de jetons d'actions est en outre configuré pour transmettre, pour chaque objet généré, un jeton d'action contenant une liste d'actions devant être effectuées pour la récupération de cet objet, ainsi que l'identifiant de transaction unique relatif à cet objet au module d'interface utilisateur (143) ;
• le module d'interface utilisateur (143) est en outre configuré pour transmettre, pour chaque objet généré, une instruction comprenant ledit jeton d'action et ledit identifiant de transaction unique relatifs à cet objet au module client (142) de gestion de droits numériques ;
• le module client (142) de gestion de droits numériques est en outre configuré pour transmettre, pour chaque objet généré, une instruction (27) comprenant ledit jeton d'action et ledit identifiant de transaction unique relatifs à cet objet au module (123, 132) de gestion de droits numériques et d'accès audit contenu numérique ;
• le module (123, 132) de gestion de droits numériques et d'accès audit contenu numérique est configuré pour récupérer, pour chaque objet relatif à un jeton d'action reçu, ledit objet, sur la base de l'identifiant de transaction unique et la liste d'actions relatifs à cet objet ;
• le module (123, 132) de gestion de droits numériques et d'accès audit contenu numérique est en outre configuré pour transmettre une requête en traduction de l'identifiant de Gestion des Droits Numériques GDN (29) en une clef de chiffrement cryptographique au module (124) de stockage de clefs de chiffrement cryptographiques et d'identifiants de contenus ;
• le module (123, 132) de gestion de droits numériques et d'accès audit contenu est configuré pour transmettre, pour chaque objet relatif à un jeton d'action reçu, dudit objet, le ou chaque objet transmis comprenant ladite clef de chiffrement cryptographique traduite au module client (142) de gestion de droits numériques.

2. Système selon la revendication 1, **caractérisé en ce que** le module (121, 122 ; 42) de chiffrement d'un contenu numérique comprend un premier sous-module (121) d'embrouillage du contenu numérique, et un deuxième sous-module (122) de génération de messages de droits de contrôle, relié au premier sous-module (121), le premier sous-module (121) d'embrouillage du contenu numérique étant apte à chiffrer ledit contenu numérique via une clef de chiffrement cryptographique secrète, le deuxième sous-module (122) de génération de messages de droits de contrôle étant apte à chiffrer chacune desdites clefs de chiffrement cryptographiques secrètes, et à ainsi obtenir, pour chaque clef de chiffrement cryptographique secrète chiffrée, un message de droits de contrôle.

3. Système selon la revendication 2, **caractérisé en ce que** le premier sous-module (121) d'embrouillage du contenu numérique est un multiplexeur.

4. Système selon la revendication 1 ou 2, **caractérisé en ce que** le dispositif (12,13) de gestion de droits numériques comprend un premier module (133) frontal de création et de gestion de jetons d'actions, et un deuxième module (125) dorsal de création et de gestion de jetons d'actions, relié au premier module frontal (133).

5. Système selon l'une quelconque des revendications précédentes, **caractérisé en ce que** le dispositif (12,13) de gestion de droits numériques comprend un premier module (132) frontal de gestion de droits numériques et d'accès au contenu numérique, et un deuxième module (123) dorsal de gestion de droits numériques et d'accès au contenu numérique, relié au premier module frontal (132).

6. Système selon l'une quelconque des revendications précédentes, **caractérisé en ce que** le réseau Internet de communication de données est un réseau conforme au standard télévision sur IP, et **en ce que** le contenu numérique à flux continu est un flux audiovisuel de télévision en mode direct.

7. Système selon l'une quelconque des revendications précédentes, **caractérisé en ce que** le dispositif (12,13) de gestion de droits numériques et le dispositif client (14) forment une architecture client - serveur, au moins un des modules (121-126, 132-133 ; 42) du dispositif (12,13) de gestion de droits numériques étant un serveur.

8. Procédé d'acquisition de droits numériques mis en œuvre par un système selon l'une quelconque des revendications 1 à 7, le procédé comprenant les étapes suivantes :
• l'émission, par le module d'interface utilisateur (143), d'une demande (21) de mise à jour de droits numériques, ladite demande de mise à jour (21) comprenant un identifiant du dispositif client (14) et un identifiant de Gestion des Droits Numériques GDN ;
• l'émission, par le module (125, 133) de création et de gestion de jetons d'actions, suite à la réception de la demande (21) de mise à jour de droits numériques, d'une requête (22, 23, 24) en récupération des droits numériques de l'utilisateur, ladite requête (22, 23, 24) étant émise sur la base de l'identifiant du dispositif client (14) ;
• la transmission, par le module d'interfaçage (126 ; 42), de ladite requête (22, 23, 24) au système (112) de gestion de relations clients ;
• la réception, par le module (125, 133) de création et de gestion de jetons d'actions, via le module d'interfaçage (126 ; 42), des droits numériques de l'utilisateur transmis par le système (112) de gestion de relations clients ;
• la transmission au module (123, 132) de gestion de droits numériques et d'accès audit contenu numérique, par le module (125, 133) de création et de gestion de jetons d'actions, desdits droits numériques reçus ;
• la traduction, par le module (123, 132) de gestion de droits numériques et d'accès audit contenu numérique, desdits droits numériques en objets liés auxdits droits numériques ;
• l'assignation, par le module (123, 132) de gestion de droits numériques et d'accès audit contenu numérique, d'un identifiant de transaction unique propre à chaque objet généré ;
• la transmission au module d'interface utilisateur (143), par le module (125, 133) de création et de gestion de jetons d'actions, pour chaque objet généré, d'un jeton d'action contenant une liste d'actions devant être effectuées pour la récupération de cet objet, ainsi que de l'identifiant de transaction unique relatif à cet objet ;
• la transmission au module client (142) de gestion de droits numériques, par le module d'interface utilisateur (143), pour chaque objet généré, d'une instruction (26) comprenant ledit jeton d'action et ledit identifiant de transaction unique relatifs à cet objet ;
• la transmission au module (123, 132) de gestion de droits numériques et d'accès audit contenu numérique, par le module client (142) de gestion de droits numériques, pour chaque objet généré, d'une instruction (27) comprenant ledit jeton d'action et ledit identifiant de transaction unique relatifs à cet objet ;
• la récupération, par le module (123, 132) de gestion de droits numériques et d'accès audit contenu numérique, pour chaque objet relatif à un jeton d'action reçu, dudit objet, sur la base de l'identifiant de transaction unique et de la liste d'actions relatifs à cet objet ;
• la transmission au module (124) de stockage de clefs de chiffrement cryptographiques et d'identifiants de contenus, par le module (123, 132) de gestion de droits numériques et d'accès audit contenu numérique, d'une requête en traduction de l'identifiant de Gestion des Droits Numériques GDN (29) en une clef de chiffrement cryptographique
• suite à la traduction, par le module (124), de l'identifiant de Gestion des Droits Numériques GDN (29) en une clef de chiffrement cryptographique, la transmission au module client (142) de gestion de droits numériques, par le module (123, 132) de gestion de droits numériques et d'accès audit contenu numérique, pour chaque objet relatif à un jeton d'action reçu, dudit objet, le ou chaque objet transmis comprenant ladite clef de chiffrement cryptographique.

9. Procédé de transmission de contenu numérique à flux continu sur un réseau Internet de communication de données, ledit réseau Internet étant structuré selon un mode de routage en multidiffusion, ledit procédé étant mis en œuvre par un système selon l'une quelconque des revendications 1 à 7, le procédé comprenant un sous-procédé d'acquisition de droits numériques selon la revendication 8, le procédé comprenant en outre les étapes suivantes :
• la transmission au module de chiffrement (121, 122 ; 42) d'un contenu numérique, par la source (111) de contenu numérique, d'un contenu numérique à flux continu (31), via le réseau Internet de communication de données ;
• le chiffrement, par le module de chiffrement (121, 122 ; 42) d'un contenu numérique, dudit contenu numérique (31) via une clef de chiffrement cryptographique secrète ;
• la transmission au module (124) de stockage de clefs de chiffrement cryptographiques et d'identifiants de contenus, par le module de chiffrement (121, 122 ; 42) d'un contenu numérique, de critères d'accès requis pour un canal donné, ledit canal contenant tout ou partie dudit contenu numérique ;
• la traduction, par le module (124) de stockage de clefs de chiffrement cryptographiques et d'identifiants de contenus, desdits critères d 'accès requis en un identifiant de contenu spécifique et en une clef de contenu spécifique ;
• la transmission au module de chiffrement (121, 122 ; 42) d'un contenu numérique, par le module (124) de stockage de clefs de chiffrement cryptographiques et d'identifiants de contenus, dudit identifiant de contenu spécifique et de ladite clef de contenu spécifique ;
• l'insertion, par le module de chiffrement (121, 122 ; 42) d'un contenu numérique, dudit identifiant de contenu spécifique et de ladite clef de contenu spécifique dans le contenu numérique chiffré, un flux de données multiplexées (34, 35) étant obtenu à l'issue de cette étape d'insertion, le flux de données multiplexées (34, 35) contenant ledit contenu numérique chiffré, ledit identifiant de contenu spécifique et ladite clef de contenu spécifique ;
• la transmission au module d'accès, d'exploration, et de visualisation (141) du dispositif client (14), par le module de chiffrement (121, 122 ; 42) d'un contenu numérique, dudit flux de données multiplexées (34, 35), via ledit réseau Internet de communication de données ;
• la récupération, par le module d'accès, d'exploration, et de visualisation (141), de l'identifiant de contenu spécifique contenu dans le flux de données multiplexées (34, 35), et la transmission dudit identifiant de contenu numérique au module client (142) de gestion de droits numériques ;
• la vérification, par le module client (142) de gestion de droits numériques, si un objet correspondant audit identifiant de contenu spécifique existe et, le cas échéant, la délivrance d'un droit d'accès, d'exploration, et de visualisation du contenu numérique au module d'accès, d'exploration, et de visualisation (141).

10. Produit programme d'ordinateur téléchargeable depuis un réseau de communication et/ou enregistré sur un support lisible par ordinateur et/ou exécutable par un processeur, **caractérisé en ce qu'**il comprend des instructions de programme, lesdites instructions de programme étant adaptées pour mettre en œuvre les étapes du procédé d'acquisition de droits numériques selon la revendication 8 et/ou les étapes du procédé de transmission de contenu numérique selon la revendication 9 lorsque le produit programme est exécuté sur un ordinateur.

11. Support d'enregistrement sur lequel est enregistré un programme d'ordinateur comprenant des instructions de code de programme pour mettre en œuvre les étapes du procédé d'acquisition de droits numériques selon la revendication 8 et/ou les étapes du procédé de transmission de contenu numérique selon la revendication 9.

## Patentansprüche

1. System zur Verwaltung digitaler Rechte und zur Übertragung von digitalem Streaming-Inhalt über ein Internet-Datenübertragungsnetz, wobei das Internet-Netz gemäß einem Multicast-Routing-Modus strukturiert ist, wobei das System aufweist:
• eine Vorrichtung (12, 13) zur Verwaltung digitaler Rechte, die umfasst:
∘ mindestens ein Modul (121, 122; 42) zur Verschlüsselung eines digitalen Inhalts, das in der Lage ist, über das Internet-Datenübertragungsnetz mit einer Quelle (111) für digitalen Streaming-Inhalt verbunden zu werden und in der Lage ist, den digitalen Streaming-Inhalt der Quelle (111) zu empfangen;
∘ ein Modul (124) zum Speichern von kryptographischen Verschlüsselungsschlüsseln und Inhaltskennungen, die mit dem Verschlüsselungsmodul (121, 122) verbunden sind;
∘ ein Schnittstellenmodul (126; 42) mit einem Managementsystem (112) für Kundenbeziehungen;
∘ mindestens ein Modul (125, 133) zur Erstellung und Verwaltung von Aktions-Token, das mit dem Schnittstellenmodul (126; 42) verbunden ist;
∘ mindestens ein Modul (123, 132) zur Verwaltung digitaler Rechte und des Zugriffs auf den digitalen Inhalt, das mit dem Modul (124) zum Speichern kryptographischer Verschlüsselungsschlüssel und Inhaltskennungen und mit dem Modul (125, 133) zum Erzeugen und Verwaltung von Aktions-Token verbunden ist; wobei das Modul (123, 132) zur Verwaltung digitaler Rechte und des Zugriffs auf den digitalen Inhalt eine Datenbank zum Speichern von Objekten und Transaktionen in Bezug auf die digitalen Rechte umfasst;
• eine Client-Vorrichtung (14) für den Zugriff auf den digitalen Streaming-Inhalt, die über das Internet-Datenübertragungsnetz mit der Vorrichtung (12, 13) zur Verwaltung digitaler Rechte verbunden ist und umfasst:
∘ ein Modul (141) für den Zugriff, die Erforschung und die Anzeige des digitalen Streaming-Inhalts;
∘ ein Benutzerschnittstellenmodul (143), das mit dem Modul (125, 133) zur Erstellung und Verwaltung von Aktions-Token verbunden ist;
∘ ein Client-Modul (142) zur Verwaltung digitaler Rechte, das mit dem Modul (141) für den Zugriff, die Erforschung und die Anzeige des digitalen Streaming-Inhalts, mit dem Benutzerschnittstellenmodul (143) und mit dem Modul (123, 132) zur Verwaltung digitaler Rechte und des Zugriffs auf den digitalen Inhalt verbunden ist; wobei jedes Modul (121 bis 126, 141 bis 143, 42) aus einer Softwarekomponente, einer Hardwarekomponente oder einem Satz von Hardware- und Softwarekomponenten gebildet ist, **dadurch gekennzeichnet, dass**;
• das Benutzerschnittstellenmodul (143) konfiguriert ist, um eine Aktualisierungsanforderung (21) für digitale Rechte auszugeben, wobei die Aktualisierungsanforderung (21) eine Kennung der Client-Vorrichtung (14) und eine DRM-Kennung (Digital Rights Management) umfasst; und
• das Modul (125, 133) zur Erzeugung von Token und zum Zugriff auf digitalen Inhalt konfiguriert ist, um die Anforderung (21) zur Aktualisierung digitaler Rechte zu empfangen und eine Abfrage (22, 23, 24) zur Wiederherstellung der digitalen Rechte des Benutzers ausgibt, wobei die Abfrage (22, 23, 24) auf Grundlage der Kennung der Client-Vorrichtung (14) ausgegeben wird;
• das Schnittstellenmodul (126; 42) konfiguriert ist, um die Abfrage (22, 23, 24) an das Managementsystem (112) für Kundenbeziehungen zu übermitteln;
• das Modul (125, 133) zur Erstellung und Verwaltung von Aktions-Token ferner konfiguriert ist, um über das Schnittstellenmodul (126; 42) digitale Benutzerrechte zu empfangen, die vom Managementsystem (112) für Kundenbeziehungen übertragen werden;
• das Modul (125, 133) zur Erstellung und Verwaltung von Aktions-Token konfiguriert ist, um die empfangenen digitalen Rechte an das Modul (123, 132) zur Verwaltung digitaler Rechte und des Zugriffs auf den digitalen Inhalt zu übertragen;
• das Modul (123, 132) zur Verwaltung digitaler Rechte und des Zugriffs auf den digitalen Inhalt konfiguriert ist, um die digitalen Rechte in Objekte zu übersetzen, die mit den digitalen Rechten in Beziehung stehen, und um jedem erzeugten Objekt eine eindeutige Transaktionskennung zuzuweisen, die für jedes erzeugte Objekt spezifisch ist;
• das Modul (125, 133) zur Erstellung und Verwaltung von Aktions-Token ferner konfiguriert ist, um für jedes erzeugte Objekt ein Aktions-Token mit einer Liste von Aktionen, die zur Wiederherstellung dieses Objekts durchzuführen sind, sowie die eindeutige Transaktionskennung in Bezug auf dieses Objekt an das Benutzerschnittstellenmodul (143) zu übertragen;
• das Benutzerschnittstellenmodul (143) ferner konfiguriert ist, um für jedes erzeugte Objekt eine Anweisung, die das Aktions-Token und die eindeutige Transaktionskennung in Bezug auf dieses Objekt umfasst, an das Client-Modul (142) zur Verwaltung digitaler Rechte zu übertragen;
• das Client-Modul (142) zur Verwaltung digitaler Rechte ferner konfiguriert ist, um für jedes erzeugte Objekt eine Anweisung (27), die den Aktions-Token und die eindeutige Transaktionskennung in Bezug auf dieses Objekt umfassen, an das Modul (123, 132) zur Verwaltung digitaler Rechte und zum Zugriff auf den digitalen Inhalt zu übertragen;
• das Modul (123, 132) zur Verwaltung digitaler Rechte und des Zugriffs auf den digitalen Inhalt konfiguriert ist, um für jedes Objekt in Bezug auf ein empfangenes Aktions-Token das Objekt auf Grundlage der eindeutigen Transaktionskennung und der Liste von Aktionen in Bezug auf dieses Objekt wieder herzustellen;
• das Modul (123, 132) zur Verwaltung digitaler Rechte und des Zugriffs auf den digitalen Inhalt ferner konfiguriert ist, um eine Abfrage zur Übersetzung der DRM-Kennung (29) in einen kryptographischen Verschlüsselungsschlüssel an das Modul (124) zum Speichern kryptographischer Verschlüsselungsschlüssel und Inhaltskennungen zu übertragen;
• das Modul (123, 132) zur Verwaltung digitaler Rechte und des Zugriffs auf den Inhalt konfiguriert ist, um für jedes Objekt in Bezug auf ein von dem Objekt empfangenes Aktions-Token, das oder jedes übertragene Objekt, das den übersetzten kryptographischen Verschlüsselungsschlüssel umfasst, an das Client-Modul (142) zur Verwaltung digitaler Rechte zu übertragen.

2. System nach Anspruch 1, **dadurch gekennzeichnet, dass** das Modul (121, 122; 42) zum Verschlüsseln eines digitalen Inhalts ein erstes Untermodul (121) zum Verwürfeln des digitalen Inhalts und ein zweites Untermodul (122) zur Erzeugung von Kontrollrechtnachrichten umfasst, das mit dem ersten Untermodul (121) verbunden ist, wobei das erste Untermodul (121) in der Lage ist, den digitalen Inhalt zu verwürfeln, den digitalen Inhalt über einen geheimen kryptographischen Verschlüsselungsschlüssel zu verschlüsseln, das zweite Untermodul (122) zum Erzeugen von Kontrollrechtnachrichten in der Lage ist, jeden der geheimen kryptographischen Verschlüsselungsschlüssel zu verschlüsseln und somit für jeden verschlüsselten geheimen kryptographischen Verschlüsselungsschlüssel eine Kontrollrechtnachricht zu erhalten.

3. System nach Anspruch 2, **dadurch gekennzeichnet, dass** das erste Untermodul (121) zur Verschlüsselung digitaler Inhalte ein Multiplexer ist.

4. System nach Anspruch 1 oder 2, **dadurch gekennzeichnet, dass** die Vorrichtung (12, 13) zur Verwaltung digitaler Rechte ein erstes Frontend-Modul (133) zur Erzeugung und Verwaltung von Aktions-Token und ein zweites Backend-Modul (125) zur Erzeugung und Verwaltung von Aktions-Token umfasst, das mit dem ersten Frontend-Modul (133) verbunden ist.

5. System nach einem der vorhergehenden Ansprüche, **dadurch gekennzeichnet, dass** die Vorrichtung (12, 13) zur Verwaltung digitaler Rechte ein erstes Frontend-Modul (132) zur Verwaltung digitaler Rechte und des Zugangs zu digitalen Inhalten und ein zweites Backend-Modul (123) zur Verwaltung digitaler Rechte und des Zugangs zu digitalen Inhalten umfasst, das mit dem ersten Frontend-Modul (132) verbunden ist.

6. System nach einem der vorhergehenden Ansprüche, **dadurch gekennzeichnet, dass** das Internet-Datenübertragungsnetz ein Netz ist, das dem IPTV-Standard entspricht, und dass der digitale Streaming-Inhalt ein audiovisueller Direktmodus-Fernsehstrom ist.

7. System nach einem der vorhergehenden Ansprüche, **dadurch gekennzeichnet, dass** die Vorrichtung (12, 13) zur Verwaltung digitaler Rechte und die Client-Vorrichtung (14) eine Client - Server-Architektur bilden, wobei mindestens eines der Module (121 bis 126, 132 bis 133; 42) der Vorrichtung (12, 13) zur Verwaltung digitaler Rechte ein Server ist.

8. Verfahren zum Erwerb digitaler Rechte, das von einem System nach einem der Ansprüche 1 bis 7 ausgeführt wird, wobei das Verfahren die folgenden Schritte umfasst:
• Ausgabe einer Anforderung (21) zur Aktualisierung digitaler Rechte durch das Benutzerschnittstellenmodul (143), wobei die Anforderung zur Aktualisierung (21) eine Kennung der Client-Vorrichtung (14) und eine DRM-Kennung umfasst;
• Ausgabe durch das Modul (125, 133) zur Erstellung und Verwaltung von Aktions-Token nach Erhalt der Anforderung (21) zur Aktualisierung digitaler Rechte einer Abfrage (22, 23, 24) zur Wiederherstellung der digitalen Rechte des Benutzers, wobei die Abfrage (22, 23, 24) auf Grundlage der Kennung der Client-Vorrichtung (14) ausgegeben wird;
• Übertragung durch das Schnittstellenmodul (126; 42) der Abfrage (22, 23, 24) an das Kundenbeziehungsmanagementsystem (112);
• Empfang durch das Modul (125, 133) zur Erstellung und Verwaltung von Aktions-Token über das Schnittstellenmodul (126; 42) von digitalen Rechten des Benutzers, die vom Kundenbeziehungsmanagementsystem (112) übertragen werden;
• Übertragung an das Modul (123, 132) zur Verwaltung digitaler Rechte und des Zugangs zu diesen digitalen Inhalten der empfangenen digitalen Rechte durch das Modul (125, 133) zur Erstellung und Verwaltung von Aktions-Token;
• Übersetzung durch das Modul (123, 132) zur Verwaltung digitaler Rechte und des Zugangs zu diesen digitalen Inhalten der digitalen Rechte in Objekten, die mit diesen digitalen Rechten verknüpft sind;
• Zuweisung, durch das Modul (123, 132) zur Verwaltung digitaler Rechte und des Zugriffs auf den digitalen Inhalt, einer eindeutigen Transaktionskennung, die für jedes erzeugte Objekt spezifisch ist;
• Übertragung an das Benutzerschnittstellenmodul (143) durch das Modul (125, 133) zur Erzeugung und Verwaltung von Aktions-Token für jedes erzeugte Objekt eines Aktions-Tokens, das eine Liste von Aktionen enthält, die für die Wiederherstellung dieses Objekts durchzuführen sind, sowie die eindeutigen Transaktionskennung, die sich auf dieses Objekt bezieht;
• Übertragung an das Client-Modul (142) zur Verwaltung digitaler Rechte durch das Benutzerschnittstellenmodul (143) für jedes erzeugte Objekt einer Anweisung (26), die das Aktions-Token und die eindeutige Transaktionskennung in Bezug auf dieses Objekt umfasst;
• Übertragung an das Modul (123, 132) zur Verwaltung digitaler Rechte und des Zugriffs auf den digitalen Inhalt durch das Client-Modul (142) zur Verwaltung digitaler Rechte für jedes erzeugte Objekt einer Anweisung (27), die den Aktions-Token und die eindeutige Transaktionskennung in Bezug auf das Objekt umfasst;
• Wiederherstellung durch das Modul (123, 132) zur Verwaltung digitaler Rechte und des Zugriffs auf den digitalen Inhalt für jedes Objekt in Bezug auf ein empfangenes Aktions-Token des Objekts, auf Grundlage der eindeutigen Transaktionskennung und der Liste von Aktionen in Bezug auf dieses Objekt;
• Übertragung an das Modul (124) zum Speichern von kryptographischen Verschlüsselungsschlüsseln und Inhaltskennungen durch das Modul (123, 132) zur Verwaltung digitaler Rechte und den Zugriff auf digitalen Inhalt einer Abfrage zur Übersetzung der DRM-Kennung (29) in einen kryptographischen Verschlüsselungsschlüssel;
• Übertragung an das Client-Modul (142) zur Verwaltung digitaler Rechte durch das Modul (123, 132) zur Verwaltung digitaler Rechte und des Zugriffs auf den digitalen Inhalt des Objekts nach der Übersetzung der DRM-Kennung (29) in einen kryptographischen Verschlüsselungsschlüssel durch das Modul (124), für jedes Objekt in Bezug auf ein empfangenes Aktions-Token, wobei das oder jedes übertragene Objekt den kryptographischen Verschlüsselungsschlüssel umfasst.

9. Verfahren zur Übertragung von digitalem Streaming-Inhalt über ein Internet-Datenübertragungsnetz, wobei das Internet-Netz gemäß einem Multicast-Routing-Modus strukturiert ist, wobei das Verfahren durch ein System nach einem der Ansprüche 1 bis 7 ausgeführt wird, wobei das Verfahren ein Unterverfahren zum Erwerb digitaler Rechte nach Anspruch 8 umfasst, wobei das Verfahren ferner die folgenden Schritte umfasst:
• Übertragung von digitalem Inhalt an das Verschlüsselungsmodul (121, 122; 42) durch die Quelle (111) des digitalen Inhalts eines digitalen Streaming-Inhalts (31) über das Internet-Datenübertragungsnetz;
• Verschlüsselung eines digitalen Inhalts durch das Verschlüsselungsmodul (121, 122; 42), wobei der digitale Inhalt (31) über einen geheimen kryptographischen Verschlüsselungsschlüssel verschlüsselt wird;
• Übertragung an das Modul (124) zum Speichern von kryptographischen Verschlüsselungsschlüsseln und Inhaltskennungen durch das Verschlüsselungsmodul (121, 122; 42) eines digitalen Inhalts, von Zugriffskriterien, die für einen gegebenen Kanal erforderlich sind, wobei der Kanal den gesamten digitalen Inhalt oder einen Teil davon enthält;
• Übersetzung durch das Modul (124) zum Speichern von kryptographischen Verschlüsselungsschlüsseln und Inhaltskennungen der erforderlichen Zugriffskriterien in eine spezifische Inhaltskennung und einen spezifischen Inhaltsschlüssel;
• Übertragung an das Verschlüsselungsmodul (121, 122; 42) eines digitalen Inhalts durch das Modul (124) zum Speichern von kryptographischen Verschlüsselungsschlüsseln und Inhaltskennungen der spezifischen Inhaltskennung und des spezifischen Inhaltsschlüssels;
• Einfügen eines digitalen Inhalts der spezifischen Inhaltskennung und des spezifischen Inhaltsschlüssels in den verschlüsselten digitalen Inhalt durch das Verschlüsselungsmodul (121, 122; 42), wobei am Ende dieses Einfügungsschritts ein Multiplex-Datenstrom (34, 35) erhalten wird, wobei der Multiplex-Datenstrom (34, 35) den verschlüsselten digitalen Inhalt, die spezifische Inhaltskennung und den spezifischen Inhaltsschlüssel enthält;
• Übertragung an das Zugriffs-, Untersuchungs- und Anzeigemodul (141) der Client-Vorrichtung (14) durch das Verschlüsselungsmodul (121, 122; 42) eines digitalen Inhalts des Multiplex-Datenstroms (34, 35) über das Internet-Datenübertragungsnetz;
• Wiederherstellung durch das Zugriffs-, Untersuchungs- und Anzeigemodul (141) der spezifische Inhaltskennung, die in dem Multiplex-Datenstrom (34, 35) enthalten ist und Übertragung der digitalen Inhaltskennung an das Client-Modul (142) zur Verwaltung digitaler Rechte;
• Überprüfung durch das Client-Modul (142) für die Verwaltung digitaler Rechte, ob ein Objekt vorhanden ist, das der genannten spezifischen Inhaltskennung entspricht, und wenn dies der Fall ist, dem Zugriffs-, Untersuchungs- und Anzeigemodul (141) ein Zugriffs-, Untersuchungs- und Ansichtsrecht auf den digitalen Inhalt zu erteilen.

10. Computerprogrammprodukt, das von einem Übertragungsnetz herunterladbar ist und/oder auf einem computerlesbaren Medium aufgezeichnet ist und/oder von einem Prozessor ausführbar ist, **dadurch gekennzeichnet, dass** es Programmbefehle umfasst, wobei die Programmbefehle angepasst sind, um die Schritte des Verfahrens zum Erwerb digitaler Rechte nach Anspruch 8 und/oder die Schritte des Verfahrens zur Übertragung digitaler Inhalte nach Anspruch 9 auszuführen, wenn das Programmprodukt auf einem Computer ausgeführt wird.

11. Aufzeichnungsmedium, auf dem ein Computerprogramm aufgezeichnet ist, das Programmcodeanweisungen zur Durchführung der Schritte des Verfahrens zum Erwerb digitaler Rechte nach Anspruch 8 und/oder der Schritte des Verfahrens zur Übertragung digitaler Inhalte nach Anspruch 9 umfasst.

## Claims

1. A system for managing digital rights and for streaming digital content over an Internet data communication network, the said Internet network being structured according to a multicast routing mode, the system consisting of:
• a digital rights management device (12, 13) comprising:
o at least one module (121, 122; 42) for encrypting an item of digital content, capable of being linked to a source (111) of streamed digital content via the said Internet data communication network, and capable of receiving the said streamed digital content from the said source (111) of digital content;
o a module (124) for storing cryptographic encryption keys and content identifiers, linked to the encryption module (121, 122);
o a module (126; 42) for interfacing with a customer relationship management system (112);
o at least one module (125, 133) for creating and managing action tokens, linked to the interfacing module (126; 42);
o at least one module (123, 132) for managing digital rights and access to the said digital content, linked to the module (124) for storing cryptographic encryption keys and content identifiers and to the module (125, 133) for creating and managing action tokens, the said module(123, 132) for managing digital rights and digital access to the digital content comprising a database for storing objects and transactions linked to the digital rights;
• a client device (14) for accessing the said streamed digital content, linked to the digital rights management device (12, 13) via the said Internet data communication network and comprising:
∘ a module (141) for accessing, parsing and playout of the streamed digital content;
∘ a user interface module (143), linked to the module (125,133) for creating and managing action tokens;
∘ a client module (142) for managing digital rights, linked to the module (141) for accessing, parsing and playout of the said streamed digital content, to the user interface module (143) and to the module (123, 132) for managing digital rights and access to the said digital content, each module (121-126, 141-143, 42) being formed from a software component, from a hardware component or from an assembly of software and hardware components, **characterised in that**:
• the user interface module (143) is configured to transmit a digital rights update request (21), the said update request (21) comprising an identifier of the client device (14), and a digital rights management (DRM) identifier; and
• the module (125, 133) for creating tokens and managing access to the digital content is configured to receive the digital rights update request (21) and to transmit a request (22, 23, 24) to retrieve the digital rights of the user, the said request (22, 23, 24) being transmitted on the basis of the identifier of the client device (14);
• the interfacing module (126; 42) is configured to transmit the said request (22, 23, 24) to the customer relationship management system (112);
• the module (125, 133) for creating and managing action tokens is also configured to receive, via the interfacing module (126; 42), the digital rights of the user transmitted by the customer relationship management system (112);
• the module (125, 133) for creating and managing action tokens is configured to transmit the said received digital rights to the module (123, 132) for managing digital rights and access to the digital content;
• the module (123, 132) for managing digital rights and access to the said digital content is configured to translate the said digital rights into objects linked to the said digital rights and to assign a unique transaction identifier specific to each object generated;
• the module (125, 133) for creating and managing action tokens is also configured to transmit, for each object generated, an action token containing a list of actions that must be performed in order to retrieve that object, along with the unique transaction identifier relating to that object, to the user interface module (143);
• the user interface module (143) is also configured to transmit, for each object generated, an instruction comprising the said action token and the said unique transaction identifier relating to that object, to the client module (142) for managing digital rights;
• the client module (142) for managing digital rights is also configured to transmit, for each object generated, an instruction (27) comprising the said action token and the said unique transaction identifier relating to that object, to the module (123, 132) for managing digital rights and access to the said digital content;
• the module (123, 132) for managing digital rights and access to the said digital content is configured to retrieve, for each object relating to a received action token, the said object, on the basis of the unique transaction identifier and of the list of actions relating to that object;
• the module (123, 132) for managing digital rights and access to the said digital content is also configured to transmit a request to translate the digital rights management (DRM) identifier (29) into a cryptographic encryption key, to the module (124) for storing cryptographic encryption keys and content identifiers;
• the module (123, 132) for managing digital rights and access to the said digital content is configured to transmit, for each object relating to a received action token for the said object, the or each transmitted object comprising the said translated cryptographic encryption key to the client module (142) for managing digital rights.

2. A system according to claim 1, **characterised in that** the module (121, 122; 42) for encrypting an item of digital content comprises a first sub-module (121) for scrambling digital content and a second sub-module (122) for generating entitlement control messages, linked to the first sub-module (121), the first sub-module (121) for scrambling digital content being capable of encrypting the said digital content via a secret cryptographic encryption key, the second sub-module (122) for generating entitlement control messages being capable of encrypting each of the said secret cryptographic encryption keys and thus of obtaining, for each encrypted secret cryptographic encryption key, an entitlement control message.

3. A system according to claim 2, **characterised in that** the first sub-module (121) for scrambling digital content is a multiplexer.

4. A system according to claim 1 or 2, **characterised in that** the digital rights management device (12, 13) comprises a first, front-end module (133) for creating and managing action tokens and a second, back-end module (125) for creating and managing action tokens, linked to the first, front-end module (133).

5. A system according to any of the preceding claims, **characterised in that** the digital rights management device (12, 13) comprises a first, front-end module (132) for managing digital rights and access to the digital content and a second, back-end module (123) for managing digital rights and access to the digital content, linked to the first, front-end module (132).

6. A system according to any of the preceding claims, **characterised in that** the Internet data communication network is a network compliant with the IP television standard, and **in that** the streamed digital content is a streamed television audiovisual stream.

7. A system according to any of the preceding claims, **characterised in that** the digital rights management device (12, 13) and the client device (14) form a client-server architecture, at least one of the modules (121-126, 132-133; 42) of the digital rights management device (12, 13) being a server.

8. A method for acquiring digital rights, implemented by a system according to any of claims 1 to 7, the method comprising the following steps:
• transmission, by the user interface module (143), of a digital rights update request (21), the said update request (21) comprising an identifier of the client device (14) and a digital rights management (DRM) identifier;
• transmission, by the module (125, 133) for creating and managing action tokens, subsequent to the reception of the digital rights update request (21), of a request (22, 23, 24) to retrieve the digital rights of the user, the said request (22, 23, 24) being transmitted on the basis of the identifier of the client device (14);
• transmission, by the interfacing module (126; 42) of the said request (22, 23, 24) to the customer relationship management system (112);
• reception, by the module (125, 133) for creating and managing action tokens, via the interfacing module (126; 42), of the digital rights of the user transmitted by the customer relationship management system (112);
• transmission, by the module (125, 133) for creating and managing action tokens, of the said received digital rights to the module (123, 132) for managing digital rights and access to the said digital content;
• translation, by the module (123, 132) for managing digital rights and access to the digital content, of the digital rights into objects linked to the said digital rights;
• assignment, by the module (123, 132) for managing digital rights and access to the digital content, of a unique transaction identifier specific to each object generated;
• transmission, by the module (125, 133) for creating and managing action tokens, for each object generated, of an action token containing a list of actions that must be performed in order to retrieve that object, along with the unique transaction identifier relating to that object, to the user interface module (143);
• transmission, by the user interface module (143), for each object generated, of an instruction (26) comprising the said action token and the said unique transaction identifier relating to that object, to the client module (142) for managing digital rights;
• transmission, by the client module (142) for managing digital rights, for each object generated, of an instruction (27) comprising the said action token and the said unique transaction identifier relating to that object, to the module (123, 132) for managing digital rights and access to the digital content;
• retrieval, by the module (123, 132) for managing digital rights and access to the digital content, for each object relating to a received action token, of the said object, on the basis of the unique transaction identifier and of the list of actions relating to that object;
• transmission, by the module (123, 132) for managing digital rights and access to the digital content, of a request to translate the digital rights management (DRM) identifier (29) into a cryptographic encryption key, to the module (124) for storing cryptographic encryption keys and content identifiers;
• subsequent to translation, by the module (124), of the digital rights management (DRM) identifier (29) into a cryptographic encryption key, transmission, by the module (123, 132) for managing digital rights and access to the digital content, for each object relating to a received action token, of the said object to the client module (142) for managing digital rights, the or each object transmitted comprising the said cryptographic encryption key.

9. A method for transmitting streamed digital content over an Internet data communication network, the said Internet network being structured according to a multicast routing mode, the said method being implemented by a system according to any of claims 1 to 7 and comprising a sub-process for acquiring digital rights according to claim 8, the method further comprising the following steps:
• transmission, by the source (111) of digital content, of an item of streamed digital content (31) to the module for encrypting (121, 122; 42) an item of digital content, via the Internet data communication network;
• encryption, by the module for encrypting (121, 122; 42) an item of digital content, of the said item of digital content (31) via a secret cryptographic encryption key;
• transmission, by the module for encrypting (121, 122; 42) an item of digital content, of access criteria required for a given channel, to the module (124) for storing cryptographic encryption keys and content identifiers, the said channel containing all or part of the said item of digital content;
• translation, by the module (124) for storing cryptographic encryption keys and content identifiers, of the required access criteria into a specific content identifier and into a specific content key;
• transmission, by the module (124) for storing cryptographic encryption keys and content identifiers, of the said specific content identifier and the said specific content key, to the module for encrypting (121, 122; 42) an item of digital content;
• insertion, by the module for encrypting (121, 122; 42) an item of digital content, of the said specific content identifier and the said specific content key into the encrypted item of digital content, a multiplexed data stream (34, 35) being obtained upon completion of this insertion step, the multiplexed data stream (34, 35) containing the said encrypted item of digital content, the said specific content identifier and the said specific content key;
• transmission, by the module for encrypting (121, 122; 42) an item of digital content, of the said multiplexed data stream (34, 35) to the access, parsing and playout module (141) of the client device (14), via the said Internet data communication network;
• retrieval, by the access, parsing and playout module (141), of the specific content identifier contained in the multiplexed data stream (34, 35), and transmission of the said digital content identifier to the client module (142) for managing digital rights;
• verification, by the client module (142) for managing digital rights, of whether an object corresponding to the said specific content identifier exists and, where applicable, issuance of a right to access, parse and play out the digital content to the access, parsing and playout module (141).

10. A computer program product that can be downloaded from a communication network and/or recorded on a medium that can be read by computer and/or run by a processor, **characterised in that** it comprises program instructions, the said program instructions being suitable for implementing the steps of the method for acquiring digital rights according to claim 8 and/or the steps of the method for transmitting streamed digital content according to claim 9 when the program product is run on a computer.

11. A recording medium on which a computer program, comprising program code instructions for implementing the steps of the method for acquiring digital rights according to claim 8 and/or the steps of the method for transmitting streamed digital content according to claim 9, is recorded.
